# EUROPEAN PATENT APPLICATION

(11) **EP 4 574 765 A1**
(43) Date of publication of application: **25.06.2025**
(21) Application number: 24217709.5
(22) Date of filing: 05.12.2024
(51) Int. Cl.: C01C 1/04, B01J 8/02, B01J 19/12, B01J 27/24, B01J 35/33

(54) **AMMONIA SYNTHESIS SYSTEM AND METHOD USING THE SAME**

(30) Priority: 22.12.2023 KR 20230189765; 25.01.2024 KR 20240011410
(71) Applicant: SK Innovation Co., Ltd., Seoul 03188 (KR)
(72) Inventor: IM, Ju Hwan, 34124 Daejeon (KR); SONG, Da Eun, 34124 Daejeon (KR); LEE, Jun Young, 34124 Daejeon (KR); JEONG, Jae Hun, 34124 Daejeon (KR); KIM, Sun Kug, 34124 Daejeon (KR); KIM, Ye Jin, 34124 Daejeon (KR)
(74) Representative: Prüfer & Partner mbB Patentanwälte · Rechtsanwälte

(57) **Abstract**

Provided is an ammonia synthesis system including an ammonia synthesis reactor; two or more catalyst beds included in the ammonia synthesis reactor; a backflow prevention plate disposed downstream from each of the catalyst beds, optionally except for the catalyst bed disposed at the lowest of the two or more catalyst beds, and preventing a backflow of mixed gas; a distribution device disposed upstream from each of the two or more catalyst beds and distributing the mixed gas to the catalyst bed; mixed gas supply lines arranged to supply the mixed gas to each distribution device; and a microwave heating device for emitting microwaves to each of the two or more catalyst beds, wherein the catalyst bed includes a metal nitride catalyst.

## Description

### TECHNICAL FIELD

The present disclosure generally relate to an ammonia synthesis system and a method using the ammonia synthesis system.

### BACKGROUND

There is an increasing need for renewable energy to achieve a greenhouse gas reduction to cope with climate change and depletion of oil resources. However, areas that meet an appropriate condition for renewable energy production are scattered, and it is thus essential to find out means for storing and transporting renewable energy. For example, renewable energy, which is abundant in the equatorial and southern hemisphere areas, is required to be transported to the northern hemisphere where renewable energy is highly demanded.

In addition, renewable energy has temporal variability, thus making an electric storage device essential. Ammonia is spotlighted as an energy carrier to solve the problems occurring from the area ubiquity and temporal variability of renewable energy. In particular, ammonia may be liquefied at room temperature and at pressures of 8.5 atmospheres or higher, and thus be stored and transported more easily than hydrogen. Therefore, as an alternative to solve the problems occurring from the area ubiquity and temporal variability of renewable energy, it is necessary to focus on synthesizing ammonia by using hydrogen and nitrogen, which are produced using electricity produced from renewable energy, as its raw materials.

Hydrogen, one of the main raw materials for the ammonia synthesis, may be produced by a water electrolyzer powered by renewable energy such as solar or wind energy. Renewable energy, such as solar energy or wind energy, shows temporal variability. For example, solar energy is unable to be used at night. Therefore, an ammonia synthesis system is unable to be always operated at a constant flow rate, and it is thus necessary to anticipate and handle a change in the flow rate that occurs during a production cycle.

In addition, a flow rate distribution at the front end of a catalyst bed included in an ammonia synthesis reactor may get more and more less uniform when a flow rate of the raw material such as hydrogen fed into the ammonia synthesis system decreases or increases.

In addition, in a conventional ammonia synthesis system, temperature deviation may occur between the central and outer parts of the catalyst bed especially at the beginning of its operation, which may reduce an ammonia synthesis yield.

Therefore, there is a need for an ammonia synthesis system which may cope with the change in the flow rate that occurs during the production cycle, while solving the problems of the non-uniform flow rate distribution that occurs at the front end of the catalyst bed and the reduced ammonia synthesis yield caused by the temperature deviation in the central and in outer parts of the catalyst bed at the beginning of the operation.

In addition, there is a need for the development of a material having excellent microwave reactivity when microwaves are emitted to the catalyst bed of the ammonia synthesis system to thus improve an ammonia production yield.

### SUMMARY

The present disclosure is directed to providing an ammonia synthesis system which may cope with a change in a flow rate that occurs during a production cycle, and a method using the ammonia synthesis system above.

Another embodiment of the present disclosure is directed to providing an ammonia synthesis system which may maintain a uniform flow rate distribution at the front end of a catalyst bed included in an ammonia synthesis reactor even when a flow rate of a raw material, such as hydrogen, fed into the ammonia synthesis system is decreased, in particular if the decrease in flow rate is substantial.

Still another embodiment of the present disclosure is directed to providing an ammonia synthesis system which may improve an ammonia synthesis yield by reducing a temperature deviation in an inner central part (also referred to as a central part) of a catalyst bed and in outer side parts (also referred to simply as outer parts) of the catalyst bed in particular at the beginning of its operation.

An embodiment of the present disclosure is directed to providing an ammonia synthesis system which may improve an ammonia synthesis yield at the beginning of its operation by preheating a catalyst bed before the beginning of its operation.

An embodiment of the present disclosure is directed to providing an ammonia synthesis system which may save energy by optimizing an amount of energy required by the system during its operation.

An embodiment of the present disclosure is directed to providing an ammonia synthesis system which may increase a catalyst replacement cycle by uniformly using each catalyst bed during the operation.

Another embodiment of the present disclosure is directed to providing a catalyst having excellent microwave reactivity when synthesizing ammonia.

Another embodiment of the present disclosure is directed to providing a catalyst which may improve an ammonia synthesis yield upon microwave emission.

According to an embodiement of the present disclosure, an ammonia synthesis system may include an ammonia synthesis reactor; two or more catalyst beds included in the ammonia synthesis reactor; a backflow prevention plate disposed downstream from each of the catalyst beds, optionally except for the catalyst bed disposed at the lowest of the two or more catalyst beds, and preventing a backflow of mixed gas; a distribution device disposed upstream from each of the two or more catalyst beds and distributing the mixed gas to the catalyst bed; mixed gas supply lines arranged to supply the mixed gas to each distribution device; and a microwave heating device for emitting microwaves to each of the two or more catalyst beds, wherein the catalyst bed includes a metal nitride catalyst.

The catalyst bed may include a ternary metal nitride catalyst, and/or the catalyst bed includes a passivated metal nitride catalyst.

The metal nitride catalyst may include at least one metal selected from the group consisting of molybdenum, tungsten, vanadium, chromium, manganese, iron, cobalt, and nickel, optionally the metal nitride catalyst includes cobalt molybdenum nitride.

The system may further include distribution plates each disposed between the catalyst bed and the distribution device.

The system may further include a plurality of mixed gas flow pipes which are fixed to a lower surface of the distribution plate and through which the mixed gas flows.

The mixed gas flow pipe may have a bottom surface and a side surface connecting the bottom surface with the distribution plate. A plurality of upper openings may be formed in a side surface of an upper part of the mixed gas flow pipe spaced apart from each other along a circumference of the pipe, a plurality of middle openings may be formed in a side surface of a middle part of the mixed gas flow pipe spaced apart from each other along the circumference, and a plurality of lower openings may be formed in a side surface of a lower part of the mixed gas flow pipe spaced apart from each other along the circumference. The mixed gas flow pipe may include a cover surrounding at least some regions of the side surface of the mixed gas flow pipe to provide a space for a fluid flowing out of the side surface of the mixed gas flow pipe after passing through the upper opening to be guided toward the middle opening.

The mixed gas flow pipe may further include a separator plate dividing the upper and middle parts of the mixed gas flow pipe from each other.

Each of the mixed gas supply lines may include a flow regulating device.

Each of the backflow prevention plates may include a plurality of openings, and each of the plurality of openings included in each of the backflow prevention plates may have a backflow prevention cap selectively opened based on a flow direction of the gas.

The backflow prevention cap may be coupled to a hinge disposed at a position on each circumference part of the plurality of openings included in each of the backflow prevention plates.

A coupling part of the hinge that is coupled to the hinge may include a spring to apply an elastic force in a direction in which the backflow prevention cap approaches the distribution plate.

The distribution device may have a disk shape or a toroidal shape.

In another embodiment, provided is a method for synthesizing using the ammonia synthesis system.

In the method,the ammonia synthesis system is adjusted at 1 to 300 bar and/or at 200 to 700 °C.

In the method, the mixed gas supply lines supplies hydrogen at least partially or in full to the ammonia synthesis reactor (10), which is generated via a process using an eco-friendly renewable power source.

The system may further include a heat exchanger disposed downstream from each of the two or more catalyst beds to remove heat from an effluent of the catalyst bed.

In one embodiment, provided is an ammonia synthesis system comprising: a mixed gas supply to an ammonia synthesis reactor, the mixed gas supply including hydrogen at least partially or in full, generated via a process using an eco-friendly renewable power source, the ammonia synthesis reactor; at least two catalyst beds included in the ammonia synthesis reactor; a backflow prevention plate disposed downstream from each of the catalyst beds, optionally except for the catalyst bed disposed at the lowest of the two or more catalyst beds; a distribution device disposed upstream from each of the at least two catalyst beds for distributing the mixed gas to the catalyst bed; mixed gas supply lines arranged to supply the mixed gas to each distribution device; and a microwave heating device for emitting microwaves to each of the at least two catalyst beds, wherein the catalyst bed includes a metal nitride catalyst.

Other features and aspects will be apparent from the following detailed description, the drawings, and the claims.

### BRIEF DESCRIPTION OF THE DRAWINGS

FIG. 1 is a schematic view showing an ammonia synthesis system according to an embodiment of the present disclosure.
FIG. 2 is a schematic view showing an ammonia synthesis system according to another embodiment of the present disclosure.
FIG. 3 is a perspective view showing a distribution plate and a mixed gas flow pipe according to an embodiment of the present disclosure.
FIG. 4 is a perspective view showing the inside of the mixed gas flow pipe according to an embodiment of the present disclosure.
FIG. 5 is a perspective view showing the inside of a mixed gas flow pipe according to another embodiment of the present disclosure.
FIG. 6 is a view showing a state where a backflow prevention cap of a backflow prevention plate is closed according to an embodiment of the present disclosure.
FIG. 7 is a view showing a state where the backflow prevention cap of the backflow prevention plate is opened according to an embodiment of the present disclosure.

### DETAILED DESCRIPTION

Various advantages and features of the embodiments of the present disclosure and methods accomplishing the same are apparent from embodiments described below. However, the embodiments of the present disclosure are not limited to the embodiments disclosed below and may be implemented in various different forms. These embodiments are provided only to make the present disclosure complete and allow those skilled in the art to completely appreciate the scope of the present disclosure, and the embodiments of the present disclosure are defined only by the scope of the claims.

Unless defined otherwise, all terms (including technical and scientific terms) used in the specification have the same meanings as meanings commonly understood by those skilled in the art to which the present disclosure pertains.

A term of a singular number used in the specification may be interpreted as including its plural number unless otherwise indicated.

A numerical range used in the specification may include the lower and upper limits and all values within that range, increments logically derived from the shape and width of the defined range, all values delimited by those limits, and all possible combinations of the upper and lower limits of a numerical range delimited by different shapes. The defined numerical range may also include values outside the numerical range, which may occur due to experimental errors or rounding of values unless otherwise specified in the specification.

A term "to include" or "to comprise" in the specification is a comprehensive description that has the meaning equivalent to an expression such as "to include", "to comprise", "to contain", "to have", or "to be featured", and does not exclude an element, a material, or a process that is not additionally enumerated.

The terms "upper", "middle" and "lower", or terms like "lowest" generally means a spatial distribution in a longitudinal direction of the system; these terms may refer to a separation of the corresponding element in a direction of stream (downstream or upstream), regardless whether a system having a certain longitudinal shape is arranged in an upward/vertical orientation or in a horizontal orientation or in another orientation.

Unless otherwise indicated, a unit of % used in the specification may indicate % by weight.

In the specification, "A to B" indicates "A or more and B or less" unless otherwise specifically defined.

Hereinafter, an ammonia synthesis system of the present disclosure is described below. However, the embodiments are only illustrative, and the present disclosure is not limited to the specific embodiments described.

An embodiment of the present disclosure may provide an ammonia synthesis system including an ammonia synthesis reactor; two or more catalyst beds included in the ammonia synthesis reactor; a backflow prevention plate disposed downstream from each of the catalyst beds and preventing a backflow of mixed gas, optionally except for the catalyst bed disposed at the lowest of the two or more catalyst beds; a distribution device disposed upstream from each of the two or more catalyst beds and distributing the mixed gas to the catalyst bed; mixed gas supply lines arranged to supply the mixed gas to each distribution device; and a microwave heating device for emitting microwaves to each of the two or more catalyst beds, wherein the catalyst bed includes a metal nitride catalyst. The ammonia synthesis system according to an embodiment of the present disclosure may provide a catalyst having excellent microwave reactivity when synthesizing ammonia. The ammonia synthesis system according to an embodiment of the present disclosure may provide a catalyst which may improve an ammonia synthesis yield upon microwave emission.

The catalyst included in the catalyst bed may be the metal nitride catalyst alone, or may be mixed with another catalyst and included in the catalyst bed.

In an embodiment according to the present disclosure, the catalyst may include the metal nitride catalyst.

In an embodiment according to the present disclosure, the catalyst bed may include a ternary metal nitride catalyst.

In addition, the metal nitride catalyst may include at least one selected from the group consisting of alkali metals, alkaline earth metals, and rare earth metals.

In an embodiment according to the present disclosure, the metal nitride catalyst may include at least one metal selected from the group consisting of molybdenum, tungsten, vanadium, chromium, manganese, iron, cobalt, and nickel. In addition, the metal nitride catalyst may include at least two metals selected from the group consisting of molybdenum, tungsten, vanadium, chromium, manganese, iron, cobalt, and nickel. For example, the ternary metal nitride catalyst may include cobalt molybdenum nitride (Co₂Mo₃N), however, the embodiment is not limited thereto.

The catalyst may use alumina or silica as a carrier, however, the embodiment is not limited thereto.

A method for manufacturing the metal nitride catalyst may include operation S1 feeding a metal precursor into a furnace and heating the same by feeding ammonia thereinto; and operation S2 passivating a heated product acquired in operation S1 under a flow of a mixed gas of oxygen and nitrogen.

In the metal precursor, the metal may include at least one or at least two selected from the group consisting of molybdenum, tungsten, vanadium, chromium, manganese, iron, cobalt, and nickel. For example, the metal precursor may be cobalt oxide on alumina (Co₂O₃/Al₂O₃) , molybdenum trioxide on alumina (MoO₃/Al₂O₃), or cobalt molybdate (CoMoO₄), however, the embodiment is not limited thereto.

According to an embodiment of the present disclosure, the heating in operation S1 may be performed at 200 to 1000°C, 500 to 900°C, or 600 to 800°C.

In addition, in operation S1, the heating may be performed for 30 minutes to 24 hours, 1 hour to 12 hours, or 2 hours to 6 hours.

The catalyst manufacturing method may further include cooling the acquired heated product after operation S1.

The cooling may be performed at -50 to 30°C, -20 to 30°C, or 0 to 30°C, however, the embodiment is not limited thereto.

In operation S2, the passivation may be performed under the flow of the oxygen and nitrogen mixture gas for 1 to 48 hours or 6 to 24 hours, however, the embodiment is not limited thereto. The catalyst manufacturing method may increase ammonia synthesis efficiency by preventing oxidation during ammonia synthesis, since the heated product is passivated in the operation S2.

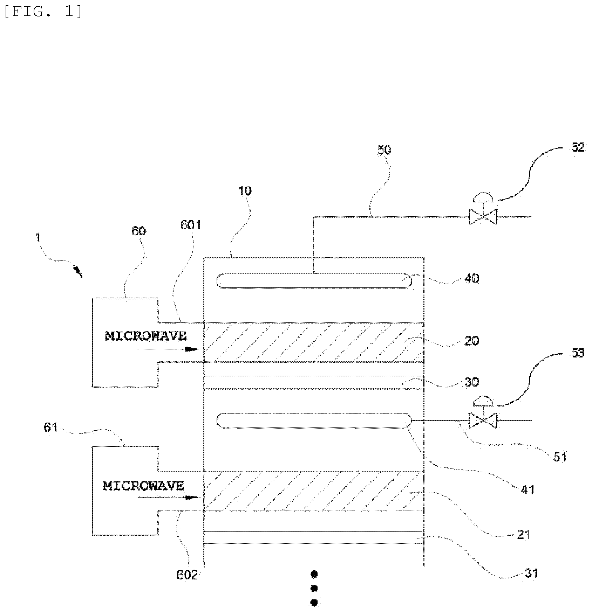

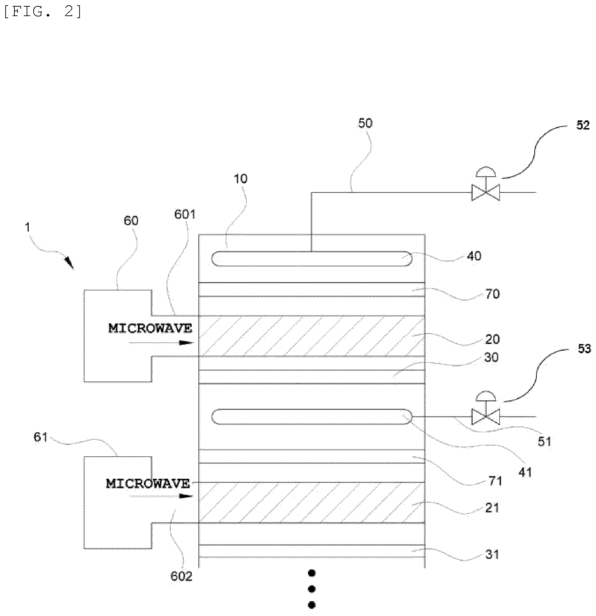

Referring to FIGS. 1 and 2, according to an embodiment of the present disclosure, provided is an ammonia synthesis system 1 including an ammonia synthesis reactor 10; two or more catalyst beds 20 and 21 included in the ammonia synthesis reactor 10; a backflow prevention plate 30 or 31 disposed downstream of each of the catalyst for preventing the backflow of the mixed gas; a distribution device 40 or 41 disposed upstream from each of the two or more catalyst beds 20 and 21 for distributing the mixed gas to the catalyst bed 20 or 21; mixed gas supply lines 50 and 51 arranged to supply the mixed gas to each distribution device 40 or 41 respectively; and a microwave heating device 60 or 61 for emitting microwaves to each of the two or more catalyst beds 20 and 21.

This is indicated by the dotted lines in Figs. 1 and 2, noting that corresponding components like microwave heating device, mixed gas supply lines, flow regulating devices, distribution devices, backflow prevention plates (optionally except for the catalyst bed disposed at the lowest of the two or more catalyst beds) may independently be provided for each or some of the multiple catalyst beds.

In an embodiment of the ammonia synthesis system 1 of the present disclosure, the ammonia synthesis system may include two catalyst beds. However, the ammonia synthesis system according to an embodiment of the present disclosure may include two or more, for example, two, three, four, five, seven, or ten catalyst beds.

The ammonia synthesis system according to an embodiment of the present disclosure may cope with the change in the flow rate that occurs during a production cycle by including a mixed gas supply line that can supply the mixed gas to each of the two or more catalyst beds. For example, the ammonia synthesis system may be operated by feeding the gas through the mixed gas supply line 50 disposed at the top for the gas to first pass through the catalyst bed 20 disposed at the top when the flow rate of the fed raw material is high, and operated by feeding the gas through the mixed gas supply line 51 disposed at the bottom for the gas to pass through the catalyst bed 21 disposed at the bottom rather than the catalyst bed 20 disposed at the top when the flow rate of the fed raw material is low. Here, backflow of the mixed gas may be prevented by the backflow prevention plate 30 when the mixed gas is fed through the mixed gas supply line 51 disposed at the bottom to pass through the catalyst bed 21 disposed at the bottom.

Here, in the specification, the flow rate that may be changed during the production cycle may be classified into three categories for convenience. As described above, the flow rate may be classified into a low flow rate, a medium flow rate, and a high flow rate. However, the change in the flow rate may be easily regulated based on common sense or judgment of those skilled in the art. The low flow rate case indicates a case where the flow rate is less than half (50%) of an annual average production flow rate (100%), the medium flow rate case indicates a case where the flow rate is half (50%) or more and less than twice (200%) of the annual average production flow rate (100%), and the high flow rate case indicates a case where the flow rate is more than twice (200%) of the annual average production flow rate (100%), however, the embodiments are not limited thereto.

For the low flow rate case as described above, there is no need to maintain a temperature of the entire reactor because the ammonia synthesis system may be operated by feeding the mixed gas through the mixed gas supply line 51 disposed at the bottom of the reactor to pass through the catalyst bed 21 disposed at the bottom of the reactor 10. Therefore, the energy consumption of the reactor may be reduced significantly. Energy may be saved by optimizing an amount of energy required by the system during the operation.

In addition, the ammonia synthesis system may increase the catalyst replacement cycle by maintaining the height of each catalyst bed even during its operation. In general, when a reaction fluid has the low flow rate, distribution at the top of the catalyst bed may be not uniform, which may cause the catalyst disposed even at the same height to have a different reaction performance. The catalyst replacement cycle may be determined by the reaction performance at the bottom of the catalyst bed, and the replacement cycle may become shorter if the reaction performance at some regions at the bottom of the catalyst bed is lowered due to non-uniform distribution caused by a reduced flow rate. However, the catalyst replacement cycle may be increased by maintaining the height of the catalyst beds relatively even if a height of the catalyst bed passed by the gas is adjusted depending on the flow rate and the gas distribution in each catalyst bed becomes uniform, as in the ammonia synthesis system according to the present disclosure.

In addition, the ammonia synthesis system according to an embodiment of the present disclosure may include the microwave heating devices 60 and 61 to enable a temperature in the central and in outer parts of the catalyst bed to be uniform significantly before the beginning of its operation, thereby improving the ammonia synthesis yield. For example, the microwave heating device may reduce or fully eliminate temperature gradients in the central and in outer parts of the catalyst bed by emitting microwaves to the catalyst bed at the beginning of the operation. In addition, the microwave heating device may improve the ammonia synthesis yield before the beginning of the operation by preheating the catalyst bed which may otherwise not be preheated sufficiently before the start of the operation.

In particular, microwave heating has been found to be especially effective when metal nitride catalyst is included in the catalyst bed, and the ammonia synthesis system 1 achieves significantly improved ammonia synthesis yield.

For example, when the fed raw material has low flow rate, the ammonia synthesis system may direct the mixed gas feed to pass through the catalyst bed 21 disposed at the bottom of the reactor 10 rather than the catalyst bed 20 disposed at the top of the reactor 10. That is, no mixed gas feed flows into the catalyst bed 20 disposed at the top of the reactor 10, and as a result a temperature of the catalyst bed 20 decreases over time. When the mixed gas flow is increased again, the mixed gas flow is fed again into the catalyst bed 20 disposed at the top of the reactor 10 to prevent a lowering of the ammonia synthesis efficiency because the temperature of the catalyst bed 20 disposed at the top is decreased during it was not used when the low flow mixed gas was directed to the catalyst bed 21. The catalyst bed 20 is preheated using microwaves emitted by the microwave heating device, thus achieving excellent ammonia synthesis efficiency even when the catalyst bed 20 is used again after it was bypassed for some time. Furthermore metal nitride catalyst in the catalyst bed shows excellent microwave susceptibility and the ammonia synthesis system 1 achieves significantly improved ammonia synthesis yield.

One or more, two or more, three or more, four or more, five or more, or eight or more microwave heating devices may be installed on each catalyst bed, and the number of microwave heating devices is not limited thereto. The number of the microwave heating devices may be increased based on a size of the reactor. Also, the installation location of the microwave heating device or devices may be adjusted for efficient microwave emission.

The microwave heating device may emit microwaves of 0.1 to 100 GHz or 1 to 10 GHz, however, the embodiment is not limited thereto.

The ammonia synthesis system may further include microwave guides 601 and 602. The microwave guides may enable the microwaves emitted by the microwave heating device to reach the catalyst bed more efficiently. The shape or installation location of the guide or guides may be changed based on a microwave waveform.

The number of catalyst beds may be two or more, three or more, four or more, five or more, six or more, seven or more, ten or more, twenty or fewer, ten or fewer, eight or fewer, seven or fewer, six or fewer, five or fewer, four or fewer, three or fewer, two or fewer, or a value between these values. The number of catalyst beds and the number of distribution devices may be the same.

In an embodiment according to the present disclosure, the mixed gas may include at least one selected from the group consisting of hydrogen and nitrogen.

Hydrogen may be produced by a device powered by renewable energy. For example, hydrogen may be produced by a water electrolyzer powered using renewable energy.

Renewable energy may include at least one selected from the group consisting of solar energy, photovoltaic energy, bioenergy, wind energy, hydroelectric energy, geothermal energy, ocean energy, and waste energy. Renewable energy shows temporal variability. For example, the solar energy is unable to be used at night. Therefore, when hydrogen is produced using the device powered by renewable energy, the ammonia synthesis system is unable to be always operated at a constant flow rate. That is, there is a need for the ammonia synthesis system of the present disclosure which may cope with a change in the flow rate that occurs during a production cycle due to the temporal variability of renewable energy.

In addition, the mixed gas supplied through the mixed gas supply line 50 or 51 may have a low temperature. Therefore, the mixed gas supplied through the mixed gas supply line 50 or 51 may function as cooling mixed gas, and may also function as a means of cooling the mixed gas flowing in the ammonia synthesis system.

Referring to Fig. 2, the ammonia synthesis system according to an embodiment of the present disclosure may further include distribution plates 70 and 71 each disposed between the catalyst bed 20 or 21 and the distribution device 40 or 41. More specifically, the distribution plate 70 may be disposed between the catalyst bed 20 and the distribution device 40, while the distribution plate 71 may be disposed between the catalyst bed 21 and the distribution device 41.

In addition, the ammonia synthesis system 1 according to an embodiment of the present disclosure may further include a plurality of mixed gas flow pipes 720. Each mixed flow pipe 720 is fixed to a lower surface 72 of the distribution plate 70 or 71 and through which the mixed gas flows.

The ammonia synthesis system may further include the distribution plates and the mixed gas flow pipes, thereby maintaining the uniform flow rate distribution before each of the catalyst beds included in the ammonia synthesis reactor 10 even when the flow rate of the fed raw material such as hydrogen is reduced.

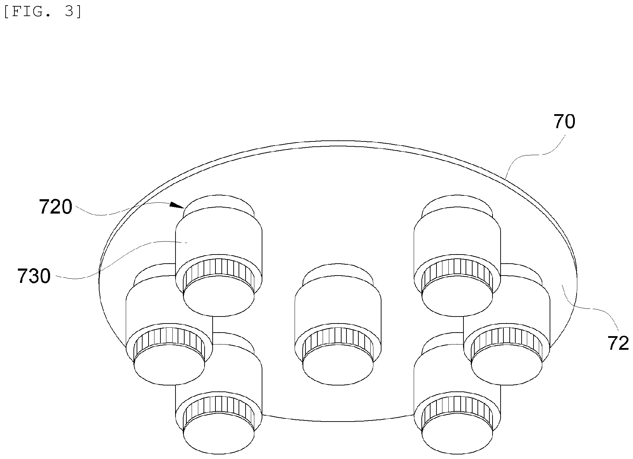

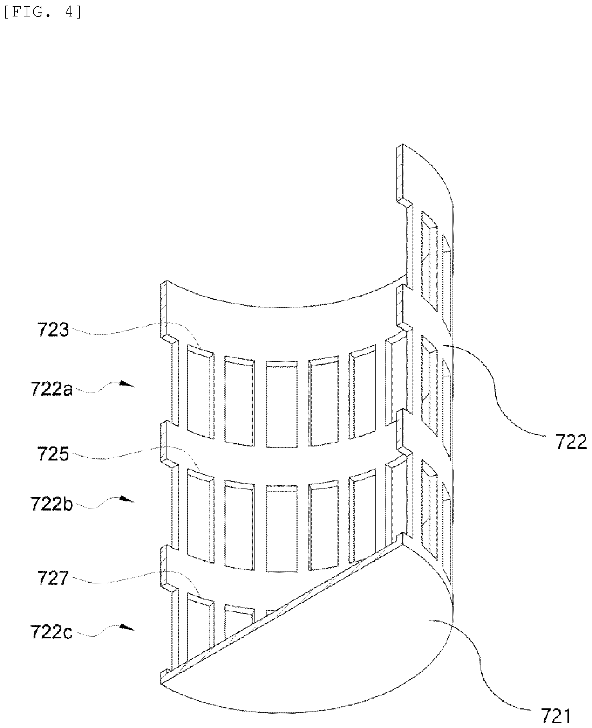

Referring to FIGS. 3 and 4, the mixed gas flow pipe 720 may have a bottom surface 721 and a side surface 722 connecting the bottom surface with the distribution plate.

A plurality of upper openings 723 may be formed in a side surface of an upper part 722a of the mixed gas flow pipe 720. The upper openings 723 are spaced apart from each other along a circumference of upper part 722a of the flow pipe 720. A plurality of middle openings 725 may be formed in a side surface of a middle part 722b of the mixed gas flow pipe 720. The plurality of middle openings 725 are spaced apart from each other along the circumference of the middle part 722b of the flow pipe 720. A plurality of lower openings 727 may be formed in a side surface of a lower part 722c of the mixed gas flow pipe 720 which are spaced apart from each other along the circumference of the lower part 722c of the flow pipe 720. A flow of the mixed gas may be formed through the upper opening 723, the middle opening 725, and the lower opening 727. The mixed gas flow pipe 720 may further include a side cover 730 surrounding at least some regions of the side surface of the mixed gas flow pipe 720 to provide a space for the fluid flowing out of the side surface of the mixed gas flow pipe 720 after passing through the upper openings 723 to be guided toward the middle openings 725. The side cover 730 may surround at least one region selected from the group consisting of the upper and middle parts of the side surface of the mixed gas flow pipe 720.

The side cover 730 may cause the fluid flowing out of the side surface of the mixed gas flow pipe 720 after passing through the upper openings 723 to be guided toward the middle openings 725. This configuration may form a flow in which the fluid is moved to the outside of the side surface of the mixed gas flow pipe 720 and then moved back to the inside of the side surface. Through the flow formed in this way, the fluids may be more smoothly mixed with each other.

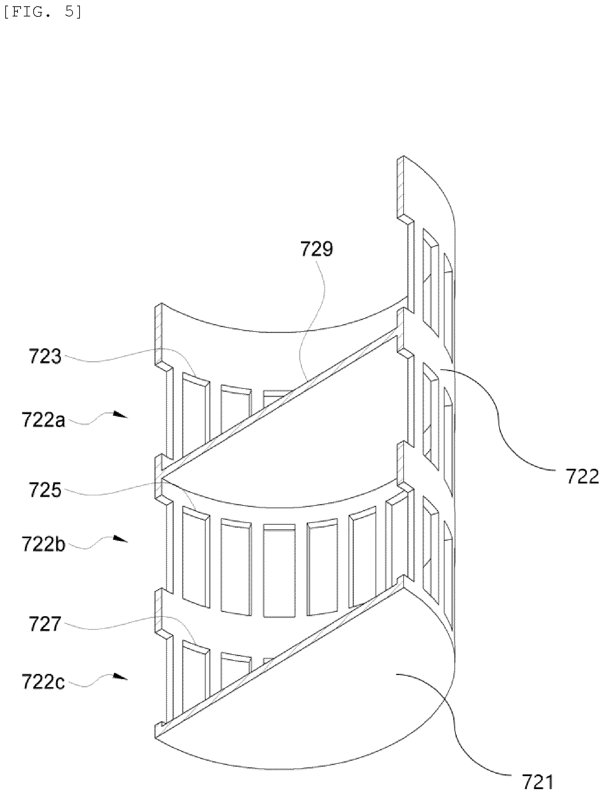

Referring to FIG. 5, the mixed gas flow pipe 720 may further include a separator plate 729 dividing the upper and middle parts of the mixed gas flow pipe 720 from each other. The separator plate 729 may completely separate the upper and middle parts of the mixed gas flow pipe 720 from each other to prevent the fluid from moving inside the mixed gas flow pipe 720. Therefore, the fluid flowing into the upper part of the mixed gas flow pipe 720 may flow out through the upper openings 723 into the space between the mixed gas flow pipe 720 and the cover 730 rather than descending directly to the middle part 722b, by blocking the flow with the separator plate 729. The fluid in the space may then flow into the mixed gas flow pipe through the middle openings 725, descend downwards, and flow out of the mixed gas flow pipe 720 through the lower openings 727. As described above, the fluid may follow a flow path in which the fluid flows out of the mixed gas flow pipe 720, flows back into the inside of the pipe, and flows out of the pipe again, thereby facilitating to mix the fluids more smoothly, and maintaining the uniform flow rate distribution at the front end of the catalyst bed.

In an embodiment according to the present disclosure, each of the mixed gas supply lines 50 and 51 may include a flow regulating device 52 and 53. The flow regulating device may enable the flow rate of the mixed gas to be controlled independently in each of the mixed gas supply lines. For example, the flow regulating device 52 and 53 may independently regulate the flow rate of the mixed gas flowing through each of the mixed gas supply lines for the flow rate of the mixed gas entering the distribution device to be maintained within a desired flow rate range. The flow regulating device may be a flow regulating valve.

In an embodiment according to the present disclosure, each of the mixed gas supply lines 50 and 51 may branch from a main supply line. Alternatively, each of the mixed gas supply lines 50 and 51 may receive at least one gas selected from the group consisting of nitrogen and hydrogen from individual supply lines.

In an embodiment according to the present disclosure, each of the backflow prevention plates 30 and 31 may include a plurality of openings 302, and each of the plurality of openings 302 included in each of the backflow prevention plates 30 and 31 may have a backflow prevention cap 303 which may be selectively opened based on a flow direction of the gas. The ammonia synthesis system according to the present disclosure may include the backflow prevention plate 30 or 31 having the backflow prevention cap 303, thereby preventing the backflow of the mixed gas even when the mixed gas is fed through the mixed gas supply line 51 disposed at the bottom to pass through the catalyst bed 21 disposed at the bottom. In addition, the system may be implemented to prevent the backflow of the mixed gas as described above to thus save energy by optimizing the amount of energy required by the system during its operation, and increase the catalyst replacement cycle by maintaining the height of each catalyst bed relatively even.

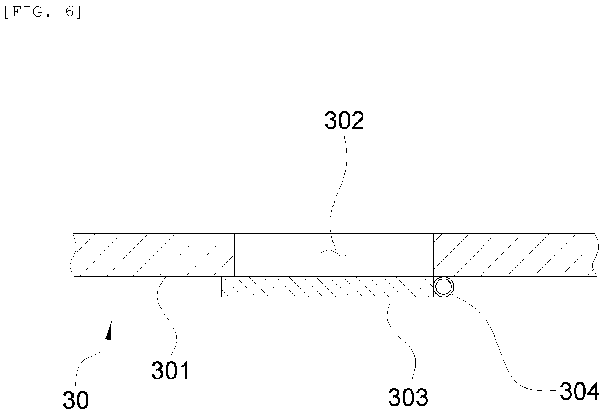

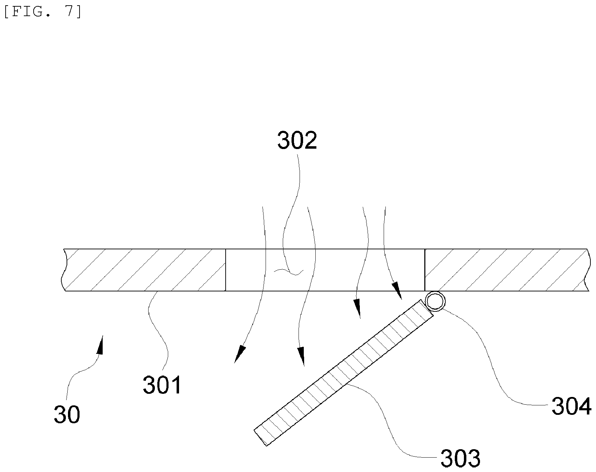

Referring to FIGS. 6 and 7, the backflow prevention cap 303 may be coupled to a hinge 304 disposed at a position on each circumference part of the plurality of openings 302 formed in each of the backflow prevention plates 30 and 31. FIG. 7 shows a state where the backflow prevention cap 303, which is coupled to the hinge 304, is opened. When the mixed gas flows from the upstream to downstream of the backflow prevention plate 30 or 31, the backflow prevention cap 303 may be maintained in an opened position allowing the mixed gas to flow normally. FIG. 6 shows a state where the backflow prevention cap 303 in a closed position. When the mixed gas is to flow from the downstream to upstream of the backflow prevention plate 30 or 31, the backflow prevention cap 303 may be closed by the flow of the mixed gas flowing from the downstream to the upstream. By this principle, the backflow prevention plate 30 or 31 according to the present disclosure may prevent the backflow of the mixed gas.

In an embodiment according to the present disclosure, a coupling part of the hinge 304 that is coupled to the hinge 304 may include a spring to apply an elastic force in a direction in which the backflow prevention cap 303 approaches the distribution plate.

In an embodiment according to the present disclosure, the distribution device 40 or 41 may have a disk shape. In yet another embodiment the distribution device 40 or 41 may have a toroidal shape. However, the embodiment may not be limited in this way. Generally, a conventional gas distribution device may also be used.

In the ammonia synthesis system according to an embodiment of the present disclosure, ammonia may be synthesized at 1 to 500 bar or 5 to 300 bar.

In addition, in the ammonia synthesis system according to an embodiment of the present disclosure, ammonia may be synthesized at 100 to 800°C or 200 to 700°C.

In the ammonia synthesis system according to an embodiment of the present disclosure, ammonia may be synthesized under a gas hourly space velocity (GHSV) condition of 1000 to 10000 h⁻¹ or 5000 to 8000 h⁻¹.

The ammonia synthesis system according to an embodiment of the present disclosure may further include a heat exchanger disposed downstream of each of the two or more catalyst beds to remove heat from an effluent of the catalyst bed. The heat exchanger may surround the catalyst bed or its surroundings. The ammonia synthesis system according to the present disclosure may include an additional heat removal means other than the supply of the cooling mixed gas by further including the heat exchanger. This configuration may enable the flexible operation of the ammonia synthesis system.

As set forth above, the ammonia synthesis system according to an embodiment of the present disclosure may cope with the change in the flow rate that occurs during the production cycle, in particular, when the mixed gas feed is generated via an eco-friendly renewable energy source.

The ammonia synthesis system according to another embodiment of the present disclosure may maintain the uniform flow rate distribution before the catalyst bed included in the ammonia synthesis reactor even when the flow rate of the raw material, such as hydrogen, fed into the ammonia synthesis system is decreased.

The ammonia synthesis system according to still another embodiment of the present disclosure may improve the ammonia synthesis yield by reducing and eliminating a temperature deviation in the central and in outer parts of a catalyst bed at the start of an operation thereof.

The ammonia synthesis system according to an embodiment of the present disclosure may improve the ammonia synthesis yield at the beginning of its operation by preheating the catalyst bed before the beginning of its operation.

The ammonia synthesis system according to an embodiment of the present disclosure may save the energy by optimizing the amount of energy required by the system during its operation.

The ammonia synthesis system according to an embodiment of the present disclosure may increase the catalyst replacement cycle by maintaining the height of each catalyst bed even during the operation.

The ammonia synthesis system according to an embodiment of the present disclosure may provide the catalyst having the excellent microwave susceptivity when synthesizing ammonia.

The ammonia synthesis system according to an embodiment of the present disclosure may provide the catalyst which may improve the ammonia synthesis yield upon the microwave emission.

The ammonia synthesis system according to an embodiment of the present disclosure may synthesize ammonia in an eco-friendly manner.

Although the embodiments of the present disclosure have been described with specific examples, it should be understood that the described examples may be modified and also other examples and embodiments may be envisioned by the skilled person without departing from the technical concepts and scope of the present disclosure. Hence, the content described above is only provided for descriptive purposes as examples to which the technical concepts and principles of the present disclosure are applied, and may further include other embodiments within the scope of the present disclosure. Furthermore, the embodiments may be combined to form additional embodiments.

## Claims

1. An ammonia synthesis system comprising:
an ammonia synthesis reactor (10);
two or more catalyst beds (20, 21) included in the ammonia synthesis reactor (10);
a backflow prevention plate (30, 31) disposed downstream from each of the catalyst beds (20, 21), optionally except for the catalyst bed disposed at the lowest of the two or more catalyst beds, for preventing a backflow of mixed gas;
a distribution device (40, 41) disposed upstream from each of the two or more catalyst beds (20, 21) for distributing the mixed gas to the catalyst bed (20, 21);
mixed gas supply lines (50, 51) arranged to supply the mixed gas to each distribution device (40, 41); and
a microwave heating device (60, 61) for emitting microwaves to each of the two or more catalyst beds (20, 21),
wherein the catalyst bed (20, 21) includes a metal nitride catalyst.

2. The system of claim 1, wherein the catalyst bed (20, 21) includes a ternary metal nitride catalyst,
and/or the catalyst bed includes a passivated metal nitride catalyst.

3. The system of claim 1 or 2, wherein the metal nitride catalyst includes at least one selected from the group consisting of molybdenum, tungsten, vanadium, chromium, manganese, iron, cobalt, and nickel,
optionally the metal nitride catalyst includes cobalt molybdenum nitride.

4. The system of any one of the preceding claims, further comprising distribution plates (70, 71), wherein each distribution plate (70, 71) is disposed between the catalyst bed (20, 21) and the distribution device (40, 41).

5. The system of any one of the preceding claims, further comprising a plurality of mixed gas flow pipes (720) which are fixed to a lower surface of the distribution plate (70, 71) and through which the mixed gas flows.

6. The system of claim 5, wherein the mixed gas flow pipe (720) has a bottom surface (721) and a side surface (722) connecting the bottom surface (721) with the distribution plate (70, 71),
wherein a plurality of upper openings (723) are formed in a side surface of an upper part (722a) of the mixed gas flow pipe (720) spaced apart from each other along a circumference of the upper part (722a) of the mixed gas flow pipe (720),
wherein a plurality of middle openings (725) are formed in a side surface of a middle part (722b) of the mixed gas flow pipe (720) spaced apart from each other along the circumference of the middle part (722b) of the mixed gas flow pipe (720), and
wherein a plurality of lower openings (727) are formed in a side surface of a lower part (722c) of the mixed gas flow pipe (720) spaced apart from each other along the circumference of the lower part (722c) of the mixed gas flow pipe (720),
optionally wherein the mixed gas flow pipe (720) includes a cover (730) surrounding at least some regions of the side surface (722) of the mixed gas flow pipe (720) to provide a space for a fluid flowing out of the side surface (722) of the mixed gas flow pipe (720) after passing through the upper opening (723) to be guided toward the middle opening (725).

7. The system of claim 6, wherein the mixed gas flow pipe (720) further includes a separator plate (729) dividing the upper (722a) and middle (722b) parts of the mixed gas flow pipe (720) from each other.

8. The system of any one of the preceding claims, wherein each of the mixed gas supply lines (50, 51) includes a flow regulating device (52, 53).

9. The system of any one of the preceding claims, wherein each of the backflow prevention plates (30, 31) includes a plurality of openings (302), and
wherein each of the plurality of openings (302) included in each of the backflow prevention plates (30, 31) has a backflow prevention cap (303) selectively opened based on a flow direction of the gas.

10. The system of claim 9, wherein the backflow prevention cap (303) is coupled to a hinge (304) disposed at a position on each circumference part of the plurality of openings (302) included in each of the backflow prevention plates (30, 31), optionally wherein a coupling part of the hinge (304) that is coupled to the hinge (304) includes a spring to apply an elastic force in a direction in which the backflow prevention cap (303) approaches the distribution plate (70, 71).

11. The system of any one of the preceding claims, wherein the distribution device (40, 41) has a disk shape or a toroidal shape.

12. The system of any one of the preceding claims, further comprising a heat exchanger disposed downstream from each of the two or more catalyst beds (20, 21) to remove heat from an effluent of the catalyst bed (20, 21).

13. A method for synthesizing ammonia using the system according to any one of the preceding claims.

14. The method of claim 13, wherein ammonia is synthesized in the ammonia synthesis system at 1 to 300 bar, and/or at 200 to 700°C.

15. The method of claim 13 or 14, wherein the mixed gas supply lines (50, 51) supplies hydrogen at least partially or in full to the ammonia synthesis reactor (10), which is generated via a process using an eco-friendly renewable power source.
